# EUROPEAN PATENT APPLICATION

(11) **EP 4 852 612 A2**
(43) Date of publication of application: **09.12.2026**
(21) Application number: 26184577.0
(22) Date of filing: 24.08.2023
(51) Int. Cl.: H04W 88/06

(54) **UPLINK RESOURCE CONFIGURATION METHOD**

(30) Priority: 29.12.2022 CN 202211708482
(62) Document number(s) of the earlier application(s) in accordance with Art. 76 EPC: 23909224.0 / 4 529 326
(71) Applicant: Honor Device Co., Ltd., Shenzhen, Guangdong 518040 (CN)
(72) Inventor: SUN, Xiaoyu, Shenzhen, 518040 (CN)
(74) Representative: Gill Jennings & Every LLP

(57) **Abstract**

This application provides an uplink resource configuration method. The method may be applied to user equipment that supports dual-SIM dual-active. In this method, after an uplink conflict occurs after uplink scheduling of a plurality of base stations is received, the user equipment that supports dual-SIM dual-active obtains a type of an uplink data packet of a service corresponding to each base station. When a current uplink data packet of a high-priority service is a padding package, the user equipment may preferentially allocate an uplink resource to a low-priority service to send an uplink data packet of the low-priority service, and does not allocate the uplink resource to the high-priority service. In this way, the low-priority service can also obtain a better service without affecting the high-priority service.

## Description

This application claims priority to Chinese Patent Application No. 202211708482.7, entitled "UPLINK RESOURCE CONFIGURATION METHOD" filed with the China National Intellectual Property Administration on December 29, 2022, which is incorporated herein by reference in its entirety.

### TECHNICAL FIELD

This application relates to the field of terminals, and in particular, to an uplink resource configuration method.

### BACKGROUND

Currently, many user equipment (User Equipment, UE), such as mobile phones, support a dual-SIM dual-active function. Dual-SIM dual-active means that two subscriber identity module (Subscriber Identity Module, SIM) cards are installed at the same time in one mobile phone, and both of the two cards are in an active state.

In a solution, two radio frequency transmit (Transmit, TX) paths are configured in a mobile phone. The two radio frequency transmit paths are respectively corresponding to the two SIM cards. In this case, the two SIM cards are independent uplink and do not interfere with each other. The two radio frequency transmit paths mean higher costs and power consumption. Therefore, in another solution, only one radio frequency transmit path is configured in a mobile phone. Various communication services on the mobile phone share this radio frequency transmit path in a contention manner.

### SUMMARY

This application provides an uplink resource configuration method, and user equipment may preferentially send valid uplink data to improve dual-SIM dual-active quality.

According to a first aspect, this application provides an uplink resource configuration method, applied to a first electronic device, where the first electronic device supports communication over a first network corresponding to a first subscriber identity module card SIM1, and supports communication over a second network corresponding to a second subscriber identity module card SIM2, and the method includes: receiving a first scheduling instruction from the first network, where the first scheduling instruction instructs the first electronic device to send uplink data of a first service in a first uplink time domain; receiving a second scheduling instruction from the second network, where the second scheduling instruction instructs the first electronic device to send uplink data of a second service in a second uplink time domain; and the first uplink time domain conflicts with the second uplink time domain; obtaining a first to-be-sent data packet that is sent in the first uplink time domain; obtaining a second to-be-sent data packet that is sent in the second uplink time domain; and sending the second to-be-sent data packet in the second uplink time domain when the first to-be-sent data packet is a padding package.

According to the method provided in the first aspect, in a dual-SIM dual-active scenario, after an uplink conflict occurs after uplink scheduling from two base stations is received, the electronic device may obtain a type of an uplink data packet of a service corresponding to each base station. When a to-be-sent uplink data packet includes a padding package, the electronic device may allocate an uplink resource to another uplink data packet. In this way, the user equipment may preferentially send valid uplink data, thereby improving dual-SIM dual-active quality.

With reference to the method provided in the first aspect, in some embodiments, a priority of the first service is higher than a priority of the second service.

In the method provided in the foregoing embodiment, when a current uplink data packet of a high-priority service is a padding package, the electronic device may preferentially allocate an uplink resource to a low-priority service to send an uplink data packet of the low-priority service, and does not allocate the uplink resource to the high-priority service. In this way, the low-priority service can also obtain a better service without affecting the high-priority service.

With reference to the method provided in the first aspect, in some embodiments, the first service is a voice call service.

With reference to the method provided in the first aspect, in some embodiments, the second service is any one of the following: a web page access service and a network game service.

With reference to the method provided in the first aspect, in some embodiments, a maximum quantity of retransmission times of the first to-be-sent data packet is M1, and the method further includes: determining that a current quantity of retransmission times of the first to-be-sent data packet i<M1; and the sending the second to-be-sent data packet in the second uplink time domain when the first to-be-sent data packet is a padding package includes: sending the second to-be-sent data packet in the second uplink time domain when the first to-be-sent data packet is a padding package, and i<M1.

In the method provided in the foregoing embodiment, when a current uplink data packet of a high-priority service is a padding package, and the padding package is still within a maximum quantity of retransmission times, the electronic device may preferentially allocate an uplink resource to a low-priority service, to send an uplink data packet of the low-priority service. When a quantity of retransmission times of the padding package reaches the maximum quantity of retransmission times, the electronic device does not preferentially allocate the uplink resource to the low-priority service, but is configured to transmit the padding package, to ensure normal communication of a service corresponding to the padding package.

With reference to the method provided in the first aspect, in some embodiments, the sending the second to-be-sent data packet in the second uplink time domain when the first to-be-sent data packet is a padding package includes: sending the second to-be-sent data packet in the second uplink time domain when the first to-be-sent data packet is a padding package, and the padding package is at initial transmission.

With reference to the method provided in the first aspect, in some embodiments, a maximum quantity of retransmission times of the first to-be-sent data packet is M1, and the method further includes: determining that a current quantity of retransmission times of the first to-be-sent data packet i<M3, where M3<M1; and the sending the second to-be-sent data packet in the second uplink time domain when the first to-be-sent data packet is a padding package includes: sending the second to-be-sent data packet in the second uplink time domain when the first to-be-sent data packet is a padding package, and i<M3.

In the method provided in the foregoing embodiment, the electronic device may reserve a plurality of opportunities for a high-priority service to send a padding package, to adapt to a complex network environment and avoid missing the only uplink opportunity due to a packet loss, which causes a communication connection abnormality corresponding to the high-priority service.

With reference to the method provided in the first aspect, in some embodiments, M1 is obtained from the first network.

With reference to the method provided in the first aspect, in some embodiments, the method further includes: when the first to-be-sent data packet is a padding package, and i=M1, determining to send the first to-be-sent data packet in the first uplink time domain.

With reference to the method provided in the first aspect, in some embodiments, before the receiving a second scheduling instruction from the second network, the method further includes: sending a scheduling request over the second network.

With reference to the method provided in the first aspect, in some embodiments, only one radio frequency transmit path is configured for the first electronic device.

With reference to the method provided in the first aspect, in some embodiments, the method further includes: determining whether the second to-be-sent data packet requires a low delay; and the sending the second to-be-sent data packet in the second uplink time domain when the first to-be-sent data packet is a padding package, and i<M1 includes: sending the second to-be-sent data packet in the second uplink time domain when the first to-be-sent data packet is a padding package, i<M1, and the second to-be-sent data packet requires a low delay.

In the method provided in the foregoing embodiment, the electronic device may further obtain a delay requirement of a data packet of a low-priority service, and determine whether the data packet of the low-priority service requires a low delay. Only when a low delay is required, the electronic device allocates the foregoing uplink resource to the data packet of the low-priority service in a case of an uplink conflict. A limitation on preemption of uplink resources for priority services can be added to avoid random preemption.

With reference to the method provided in the first aspect, in some embodiments, whether the second to-be-sent data packet requires a low delay is determined based on delay information obtained through a low-delay interface.

In the method provided in the foregoing embodiment, the electronic device may determine, through a low-delay interface between an application processor and a baseband processor, whether a data packet of a low-priority service requires a low delay.

With reference to the method provided in the first aspect, in some embodiments, whether the second to-be-sent data packet requires a low delay is determined based on a packet type of the second to-be-sent data packet.

In the method provided in the foregoing embodiment, the electronic device may further determine, based on a packet type of a packet of a low-priority service, whether the packet of the low-priority service requires a low delay.

With reference to the method provided in the first aspect, in some embodiments, when the second to-be-sent data packet is a TCP packet, it is determined that the second to-be-sent data packet requires a low delay.

In the method provided in the foregoing embodiment, when a packet type of a data packet of a low-priority service is a TCP packet, the electronic device may determine that the data packet requires a low delay.

With reference to the method provided in the first aspect, in some embodiments, the method further includes: determining a priority of a buffer queue in which the second to-be-sent data packet is located in a baseband processor; and the sending the second to-be-sent data packet in the second uplink time domain when the first to-be-sent data packet is a padding package, and i<M1 includes: sending the second to-be-sent data packet in the second uplink time domain when the first to-be-sent data packet is a padding package, i<M1, and the second to-be-sent data packet is buffered in a high-priority queue in the baseband processor.

In the method provided in the foregoing embodiment, the electronic device may further determine, depending on whether a data packet of a low-priority service is buffered in a high-priority queue in a baseband processor, whether the data packet of the low-priority service can preempt an uplink resource.

With reference to the method provided in the first aspect, in some embodiments, the method further includes: determining whether a data packet priority of the second to-be-sent data packet is higher than a data packet priority of the first to-be-sent data packet; and the sending the second to-be-sent data packet in the second uplink time domain when the first to-be-sent data packet is a padding package, and i<M1 includes: sending the second to-be-sent data packet in the second uplink time domain when the first to-be-sent data packet is a padding package, i<M1, and the data packet priority of the second to-be-sent data packet is higher than the data packet priority of the first to-be-sent data packet.

In the method provided in the foregoing embodiment, the electronic device may further determine, depending on whether a data packet priority of a data packet of a low-priority service is higher than a data packet priority of a high-priority service, whether the data packet of the low-priority service can preempt an uplink resource.

With reference to the method provided in the first aspect, in some embodiments, the method further includes: determining a preemption label of the second to-be-sent data packet; and the sending the second to-be-sent data packet in the second uplink time domain when the first to-be-sent data packet is a padding package, and i<M1 includes: sending the second to-be-sent data packet in the second uplink time domain when the first to-be-sent data packet is a padding package, i<M1, and the preemption label of the second to-be-sent data packet indicates that the second to-be-sent data packet can perform preemption.

In the method provided in the foregoing embodiment, the electronic device may further indicate, by using a preemption label, whether a data packet of a low-priority service can preempt an uplink resource.

According to a second aspect, this application provides an electronic device. The electronic device includes one or more processors and one or more memories. The one or more memories are coupled to the one or more processors, the one or more memories are configured to store computer program code, the computer program code includes computer instructions, and when the one or more processors execute the computer instructions, the electronic device is enabled to perform the method described in the first aspect and any possible implementation of the first aspect.

According to a third aspect, an embodiment of this application provides a chip system, and the chip system is applied to an electronic device. The chip system includes one or more processors, and the one or more processors are configured to invoke computer instructions, so that the electronic device performs the method according to any one of the first aspect and the possible implementations of the first aspect.

According to a fourth aspect, this application provides a computer-readable storage medium, including instructions. When the instructions are run on an electronic device, the electronic device is enabled to perform the method according to any one of the first aspect and the possible implementations of the first aspect.

It may be understood that the electronic device according to the second aspect, the chip system according to the third aspect, and the computer storage medium according to the fourth aspect are all used to perform the method provided in this application. Therefore, for beneficial effects that can be achieved, refer to the beneficial effects in the corresponding method. Details are not described herein again.

### BRIEF DESCRIPTION OF DRAWINGS

FIG. 1A is a schematic diagram of a network structure of a communication system 10 according to an embodiment of this application;
FIG. 1B is a schematic diagram of a network structure of another communication system 11 according to an embodiment of this application;
FIG. 2 is a schematic diagram of a structure of UE-1 according to an embodiment of this application;
FIG. 3 is a flowchart of an uplink resource configuration method according to an embodiment of this application;
FIG. 4 is a schematic diagram of first time domain resource configuration information and second time domain resource configuration information according to an embodiment of this application;
FIG. 5 is a flowchart of another uplink resource configuration method according to an embodiment of this application;
FIG. 6 is a flowchart of another uplink resource configuration method according to an embodiment of this application; and
FIG. 7 is an example of a structure of a network device according to an embodiment of this application.

### DESCRIPTION OF EMBODIMENTS

Terms used in the following embodiments of this application are only intended to describe particular embodiments, and are not intended to limit this application.

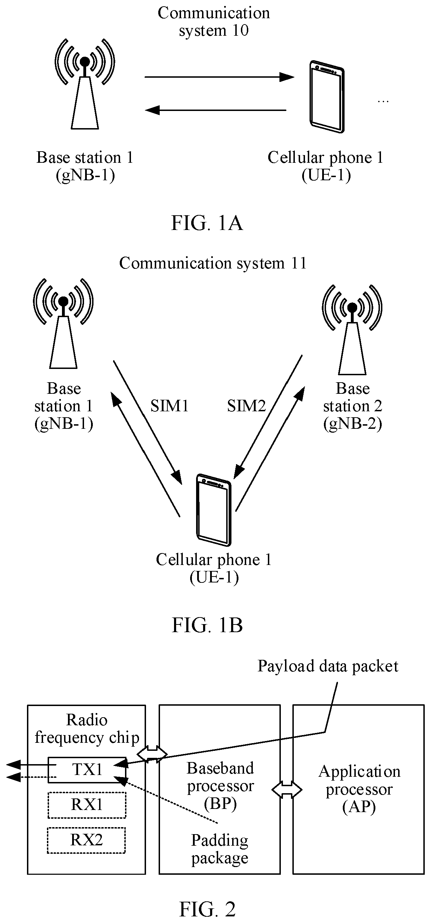

**FIG. 1A** **is a schematic diagram of a network structure of a communication system 10 according to an embodiment of this application.** A communication system may include one or more network devices and user equipment that accesses the network devices.

The network device may be a transmission reception point (transmission reception point, TRP), a base station, a relay station, a node, an access point, or the like. The network device may be an access network device in a 5G communication system or an access network device in a future evolved network. The network device may be a base transceiver station (base transceiver station, BTS) in a global system for mobile communication (global system for mobile communication, GSM) or a code division multiple access (code division multiple access, CDMA) network, or may be a NodeB (NodeB, NB) in wideband code division multiple access (wideband code division multiple access, WCDMA), or may be an evolved NodeB (evolved NodeB, eNB) in long term evolution (long term evolution, LTE), or may be a gNodeB (gNodeB, gNB) in new radio (new radio, NR). The network device may alternatively be a wireless controller in a cloud radio access network (cloud radio access network, CRAN) scenario. In the embodiments of this application, a base station gNB in NR is used as an example for subsequent description.

The user equipment may be a cellular phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, an in-vehicle device, a wearable device, a terminal in a 5G network, a terminal in a public land mobile network (public land mobile network, PLMN) network, or the like. In this embodiment of this application, a cellular phone is subsequently used as an example for description.

Therefore, for example, the communication system 10 shown in FIG. 1A may include a base station 1 (denoted as gNB-1) and a cellular phone 1 (denoted as UE-1). The UE-1 may send an access request to the gNB-1. After the gNB-1 responds to the access request, the UE-1 and the gNB-1 may establish a stable communication connection. Based on the stable connection, the UE-1 may obtain Internet uplink and download services through the gNB-1.

In this embodiment of this application, the UE-1 may be user equipment that supports dual-SIM dual-active (Dual SIM Dual Active, DSDA).

Two SIM cards, denoted as SIM1 and SIM2, may be configured in the UE-1. Because operators corresponding to the SIM1 and the SIM2 are different or for another reason, the SIM1 and the SIM2 on the UE-1 generally respectively access different base stations. Referring to a communication system 11 shown in FIG. 1B, the UE-1 may access the gNB-1 by using the SIM1, and access a base station 2 (denoted as gNB-2) by using the SIM2. After accessing the gNB-1 and the gNB-2, the UE-1 can obtain uplink and download services from the gNB-1 and the gNB-2 at the same time.

It may be understood that the communication system 11 shown in FIG. 1B is only a schematic diagram of a network structure of an example communication system, and should not constitute a limitation on an applicable scenario of the technical solution provided in this application. In some embodiments, the SIM1 and the SIM2 may also access a same base station at the same time. **In the embodiments of this application, an uplink resource configuration method provided in the embodiments of this application is subsequently described by using the communication system 11 that is shown in** **FIG. 1B** **and that separately accesses different base stations as an example.**

In some embodiments, two radio frequency transmit paths (TX) may be configured in the UE-1. The radio frequency transmit path is a device that converts a binary digital signal into a high-frequency radio electromagnetic wave signal and radiates it to space for wireless propagation. The user equipment sends uplink data to the base station based on the radio frequency transmit path. The UE-1 may allocate the SIM1 and the SIM2 to the two TXs respectively, to implement dual-SIM dual-active.

When only one radio frequency transmit path is configured, at a same moment, the UE-1 only supports one SIM card to perform uplink transmission. When the SIM1 or the SIM2 cannot obtain a radio electromagnetic wave signal radiation capability provided by the radio frequency transmit path, the UE-1 cannot send uplink data to the gNB-1 corresponding to the SIM1 or the gNB-2 corresponding to the SIM2. In this case, the SIM1 and the SIM2 on the UE-1 may contend for and share the radio frequency transmit path by using a time division multiplexing technology (time division multiplexing, TDM), to implement dual-SIM dual-active. The foregoing mode of sharing the radio frequency transmit path by using the time division multiplexing technology is also referred to as a radio frequency sharing mode.

Specifically, in the radio frequency sharing mode, the UE-1 may allocate the radio frequency transmit path to the SIM1 and the SIM2 in a unit of a frame, that is, allocate an uplink resource. In a frame structure standard, one frame corresponds to 10 ms, including 20 slots. An uplink slot is used to transmit uplink data (data sent by the user equipment to the base station). A downlink slot is used to transmit downlink data (data sent by the base station to the user equipment). For the user equipment, the user equipment may send data to the base station in an uplink slot, and receive, in a downlink slot, data delivered by the base station. One slot includes 14 OFDM symbols (Orthogonal Frequency Division Multiplexing symbol, orthogonal frequency division multiplexing symbol). The OFDM symbols include an uplink symbol and a downlink symbol. The uplink symbol serves for uplink and the downlink symbol serves for downlink.

For example, the UE-1 may first allocate a frame of uplink resource to the SIM1. In this frame, the SIM1 may send uplink data to the gNB-1 by invoking the TX. In a process of allocating the frame of uplink resource to the SIM1 for use, the other SIM card, such as the SIM2, cannot occupy the uplink resource. Then, the UE-1 may allocate a frame of uplink resource to the SIM2 for SIM2 uplink. In this way, through radio frequency sharing, the UE-1 can also implement dual-SIM dual-active.

On the UE-1, a priority exists between a communication service performed based on the SIM1 and a communication service performed based on the SIM2. For example, a priority of the communication service (denoted as a first service) performed based on the SIM1 is higher than a priority of the communication service (denoted as a second service) performed based on the SIM2. The first service is, for example, a call service, and the second service is, for example, a web page access task.

When the gNB-1 and the gNB-2 are simultaneously scheduled, according to that the priority of the first service is higher than that of the second service, the UE-1 preferentially allocates the uplink resource to the SIM1 that is processing a high-priority service, so that the SIM1 sends uplink data of the high-priority service. The SIM2 that is not allocated the uplink resource cannot send uplink data of a low-priority service. In this case, there is an uplink conflict between the high-priority service and the low-priority service. The low-priority service is prevented from obtaining the uplink resource due to a relatively low priority, and uplink is blocked.

In a solution of allocating an uplink resource by using a frame as a minimum allocation unit, after one frame of uplink resource is allocated to a high-priority service according to a service priority, the high-priority service may not have a corresponding payload data packet that needs to be uplink in this frame of time. For example, after a call service obtains an uplink resource, there is no corresponding voice data packet that needs to be uplink. When there is no voice data packet, the UE-1 generates a voice padding package (padding package) formed by invalid data, and then sends the voice padding package to the gNB-1.

When the high-priority service has no payload data packet (for example, the foregoing voice data packet) to send and sends the padding package, a payload data packet of the low-priority service is discarded because no uplink resource is allocated, thereby causing a waste of the uplink resource.

In view of this, an embodiment of this application provides an uplink resource configuration method.

In implementation of this method, after the UE-1 simultaneously receives scheduling of a plurality of base stations (for example, the gNB-1 and the gNB-2) and an uplink conflict occurs, the UE-1 may determine types of data packets that are corresponding to a high-priority service and a low-priority service and that waits for uplink: a payload data packet or a padding package. When a current uplink data packet of the high-priority service is a padding package, the UE-1 may preferentially allocate the uplink resource to the low-priority service to send a payload data packet of the low-priority service, and does not allocate the uplink resource to the high-priority service.

To avoid that the payload data packet of the low-priority service infinitely occupies the uplink resource for the padding package of the high-priority service, which affects the high-priority service, the UE-1 may further determine, based on a maximum quantity of retransmission times corresponding to the high-priority service, whether to allocate the uplink resource to the low-priority service for transmitting the payload data packet.

In this way, without affecting uplink quality of the high-priority service, the UE-1 may further provide a more efficient uplink service for the low-priority service. For a user, the user can obtain a better dual-SIM dual-active service. For example, when a call service and a web page access service are simultaneously performed, the web page access service is not blocked by the call service.

**FIG. 2** **is a schematic diagram of a structure of UE-1 according to an embodiment of this application.**

The UE-1 may include an application processor (Application processor, AP), a baseband processor (Baseband processor, BP), and a radio frequency chip.

The application processor in the UE-1 is a main central processing unit of the UE-1. Both an operating system and an application program are executed on the application processor. The baseband processor is equivalent to a modem (modem) of the UE-1, and is configured to run radio frequency communication control software of a mobile phone, and is responsible for sending and receiving data, to implement a communication function between the UE-1 and a base station (the gNB-1 or the gNB-2), and/or between the UE-1 and another UE.

A communication interface is disposed between the application processor and the baseband processor. The application processor may exchange a communication service data packet and/or control information with the baseband processor through the communication interface. The communication service data packet is, for example, a voice data packet, a web page data packet, a multimedia data packet (a picture or a video), or the like.

In this embodiment of this application, the radio frequency chip of the UE-1 includes one radio frequency transmit path, for example, TX1, and one or more radio frequency receive paths (Receive, RX), for example, RX1 and RX2. A communication interface is disposed between the baseband processor and the radio frequency chip. The baseband processor may invoke the TX1 through the communication interface to implement a data sending function; or invoke the RX1 and the RX2 through the communication interface to implement a data receiving function.

As shown in FIG. 2, for example, the application processor may receive a payload data packet delivered by an upper-layer application. The payload data packet is, for example, a voice data packet of a user encapsulated in a call process by a call application, or a message data packet, such as a text, a picture, and a video, encapsulated by an instant messaging application program. The application processor may send the payload data packet to the baseband processor. When an uplink moment arrives, the baseband processor invokes the TX1 to send the payload data packet to the base station. In some services, if the uplink moment arrives but a payload data packet delivered by an upper-layer application is not received, the baseband processor automatically generates a padding package, and sends the padding package to a corresponding base station in an allocated uplink resource.

The baseband processor may invoke the RX1 to receive downlink data sent by the base station. Then, the baseband processor may send the downlink data to the application processor, and the application processor sends the downlink data to the upper-layer application. In a process of continuing to run the upper-layer application, optionally, a user interface of the upper-layer application may change accordingly. The user can perceive a downlink service by using the change of the user interface.

In a dual-SIM dual-active scenario, the baseband processor may separately manage communication services corresponding to different SIM cards, and allocate uplink resources according to communication services corresponding to different SIM cards.

When the SIM1 and the SIM2 contend for an uplink resource (TX1), the baseband processor may determine, according to priorities of communication services running on the SIM1 and the SIM2, to allocate an uplink resource to the SIM1 or the SIM2. For example, as described in the foregoing embodiment, when the priority of the first service running on the SIM1 is higher than the priority of the second service running on the SIM2, the baseband processor may allocate the uplink resource to the first service running on the SIM1. In this embodiment of this application, the baseband processor may further determine a type of an uplink data packet of a high-priority service, and then further determine, according to the type of the data packet, a service to which an uplink resource is to be allocated. Optionally, the baseband processor may further determine, with reference to a type of an uplink data packet of a low-priority service, a service to which an uplink resource is to be allocated.

When the RX1 and the RX2 are set, when the SIM1 and the SIM2 have downlink services at the same time, the SIM1 and the SIM2 can use the RX1 and the RX2 respectively to complete their respective downlink services without contention.

It may be understood that the structure shown in this embodiment of this application does not constitute a specific limitation on the UE-1. In some other embodiments of this application, the UE-1 may include more or fewer components than those shown in the figure, or combine some components, or split some components, or have different component arrangements. For example, the UE-1 may further include a memory and the like. The components shown in FIG. 2 may be implemented by hardware, software, or a combination of software and hardware.

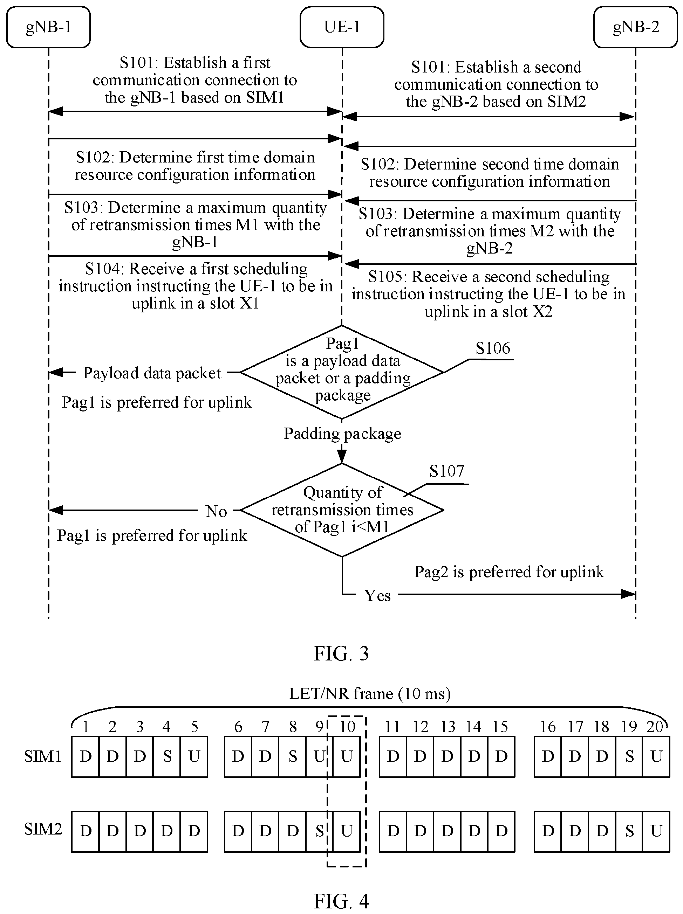

**FIG. 3** **is a flowchart of an uplink resource configuration method according to an embodiment of this application.**

S101: UE-1 establishes a first communication connection to gNB-1 based on SIM1, and establishes a second communication connection to gNB-2 based on SIM2.

User equipment configured with dual cards may establish communication connections to two base stations at the same time by using the dual cards.

The communication system 11 shown in FIG. 1B is used as an example. The UE-1 may initiate a connection request to the gNB-1 by using the SIM1, and then establish a stable communication connection to the gNB-1. In addition, the UE-1 may initiate a connection request to the gNB-2 by using the SIM2, and then establish a stable communication connection to the gNB-2. The connection between the UE-1 and the gNB-1 may be referred to as the first communication connection. The connection between the UE-1 and the gNB-2 may be referred to as the second communication connection. A sequence of establishing the connection between the UE-1 and the gNB-1 and the connection between the UE-1 the gNB-2 is not limited in this embodiment of this application.

S102: The UE-1 determines first time domain resource configuration information and second time domain resource configuration information.

Before the communication connection is established, the UE-1 may obtain cell-level time domain resource configuration information by using a broadcast message of a base station. Optionally, after the communication connection is established, the UE-1 may further determine UE-level time domain resource configuration information by using signaling such as UE-specific RRC, UE-group SFI, and UE-specific DCI. The UE-1 may determine, by using the cell-level time domain resource configuration information or the UE-level time domain resource configuration information, an uplink slot, a downlink slot, and a flexible slot that are corresponding to the communication connection.

The first communication connection is used as an example. Before the first communication connection is established, the UE-1 may obtain cell-level time domain resource configuration information of the gNB-1 by using a cell broadcast message of the gNB-1. After the first communication connection is established, optionally, the UE-1 may further determine UE-level time domain resource configuration information for the first communication connection by using signaling such as UE-specific RRC, UE-group SFI, and UE-specific DCI. Time domain resource configuration information corresponding to the first communication connection may be referred to as the first time domain resource configuration information. Time domain resource configuration information corresponding to the second communication connection may be referred to as the second time domain resource configuration information.

FIG. 4 is a schematic diagram of first time domain resource configuration information and second time domain resource configuration information according to an embodiment of this application. As shown in FIG. 4, the first time domain resource configuration information may be "DDDSU DDSUU DDDSU DDSUU", and the second time domain resource configuration information may be "DDDDD DDDSU DDDDD DDDSU". D represents a downlink slot, U represents an uplink slot, and S represents a flexible slot. The uplink slot is used to transmit uplink data. The downlink slot is used to transmit downlink data. The flexible slot may be set as an uplink slot or a downlink slot in a UE-level slot configuration. All OFDM symbols in the downlink slot serve for downlink. All OFDM symbols in the uplink slot serve for uplink. An OFDM symbol in the flexible slot may serve for uplink, or may serve for downlink. When all OFDM symbols in a flexible slot serve for uplink, the flexible slot is an uplink slot. Similarly, when all OFDM symbols in a flexible slot serve for downlink, the flexible slot is a downlink slot. Time domain resource configuration information of different communication connections may be the same or may be different. This is not limited in this embodiment of this application.

S103: The UE-1 determines a maximum quantity of retransmission times M1 with the gNB-1, and a maximum quantity of retransmission times M2 with the gNB-2.

Before the communication connection is established, the user equipment may obtain a maximum quantity of retransmission times by using a broadcast message of the base station. After the communication connection is established, the base station may re-agree the maximum quantity of retransmission times with the user equipment by using RRC signaling. The maximum quantity of retransmission times indicates an upper limit of retransmission times of a same uplink data packet allowed by the base station. If the base station does not correctly demodulate the uplink data of the user equipment within the maximum quantity of retransmission times, it is determined that the data packet fails to be transmitted, and no more attempt is to be performed. In an entire communication service process, the maximum quantity of retransmission times is variable. The base station and the user equipment may update the maximum quantity of retransmission times in real time according to considerations in various aspects such as a network status.

The communication system 11 shown in FIG. 1B is used as an example. After the first communication connection is established, the UE-1 may determine the maximum quantity of retransmission times M1 with the gNB-1. After the second communication connection is established, the UE-1 may determine the maximum quantity of retransmission times M2 with the gNB-2. M1 and M2 may be the same or different. This is not limited in this embodiment of this application.

S104: The UE-1 receives a first scheduling instruction that is delivered by the gNB-1 and that instructs the UE-1 to be in uplink in a slot X1.

An application program 1 (denoted as APP1) may be installed on the UE-1. The APP1 may perform a first service, such as the foregoing example voice call service, by using the first communication connection established based on the SIM1. The UE-1 may initiate a voice service (calling party) or receive a voice service (called party) by using the SIM1. After the voice service is initiated or the voice service is received, the UE-1 may send an uplink message to the gNB-1 by using the SIM1, to indicate a service type, to be specific, indicate that a service currently being performed is a voice service. After obtaining the voice service, the gNB-1 may periodically deliver a scheduling instruction (the first scheduling instruction) to the UE-1. The scheduling instruction is an uplink scheduling grant (UL grant) instruction. The UE-1 may send data of the first service in a time domain indicated by the first scheduling instruction.

At a moment, the UE-1 may receive the first scheduling instruction sent by the gNB-1. The first scheduling instruction may instruct the UE-1 to be in uplink in the slot X1 (first uplink time domain). The first time domain resource configuration information shown in FIG. 4 is used as an example. The UE-1 may receive, in a slot 7, the first scheduling instruction sent by the gNB-1. The first scheduling instruction instructs the UE-1 to perform uplink transmission in a slot slot10 of the SIM1.

S105: The UE-1 receives a second scheduling instruction that is delivered by the gNB-2 and that instructs the UE-1 to be in uplink in a slot X2.

An application program 2 (denoted as APP2) may be installed on the UE-1. The APP2 may perform a second service based on the second communication connection established based on the SIM2. In this embodiment of this application, the second service is a service corresponding to aperiodic scheduling, for example, the foregoing example web page access service. Specifically, when an uplink data packet needs to be sent, the UE-1 sends an uplink scheduling request (Scheduling Request, SR) to the gNB-2. After receiving the SR of the UE-1, the gNB-2 sends the UL grant to the UE-1, to instruct the UE-1 to perform uplink transmission of the second service. Generally, a priority of a service scheduled periodically is higher than a priority of a service scheduled aperiodically. Therefore, in this embodiment of this application, a priority of the first service is higher than a priority of the second service.

It may be understood that the UE-1 may create the second service in a process of executing the first service, or may create the second service before executing the first service. This is not limited in this embodiment of this application.

At a moment, the UE-1 may receive the second scheduling instruction sent by the gNB-2. The second scheduling instruction instructs the UE-1 to be in uplink in the slot X2 (second uplink time domain). The second time domain resource configuration information shown in FIG. 4 is used as an example. The UE-1 may receive, in a slot 7, the second scheduling instruction sent by the gNB-2. The second scheduling instruction instructs the UE-1 to perform uplink transmission in a slot slot10 of the SIM2.

As shown in FIG. 4, in some embodiments, the slot X1 (for example, the slot 10 of the SIM1) and the slot X2 (for example, the slot 10 of the SIM2) completely overlap. That the slot X1 and the slot X2 completely overlap indicates that a moment at which the slot X1 starts is the same as a moment at which the slot X2 starts, and that a moment at which the slot X1 ends is the same as a moment at which the slot X2 ends. In some embodiments, the slot X1 and the slot X2 partially overlap. That the slot X1 and the slot X2 partially overlap means that a moment at which the X1 starts is different from a moment at which the slot X2 starts and/or a moment at which the slot X1 ends is different from a moment at which the slot X2 ends, but they include a common time range. When the slot X1 and the slot X2 partially overlap or completely overlap, the slot X1 conflicts with the slot X2, that is, a first uplink time domain conflicts with a second uplink time domain.

In some embodiments, the UE-1 may alternatively receive the second scheduling instruction instructing the UE-1 to be in uplink in the slot X before or after receiving the first scheduling instruction, that is, a sequence of the first scheduling instruction and the second scheduling instruction is not limited in this embodiment of this application. For example, the UE-1 may receive, at a slot 8 (or a slot 6), the second scheduling instruction instructing the UE-1 to be in uplink on the slot slot10 of the SIM2.

S106: When Pag1 is a payload data packet, Pag1 is preferred for uplink. When Pag1 is a padding package, S107 is performed.

In a process of executing the first service, the APP1 may generate a payload data packet of the first service, for example, a voice data packet of a voice call service. The APP1 may send the payload data packet of the first service to a buffer area of a baseband processor. When an uplink scheduling instruction (for example, the first scheduling instruction) of the gNB-1 corresponding to the first service is received, the UE-1 may send the payload data packet to the gNB-1 in the uplink slot X indicated by the uplink scheduling instruction. When the uplink scheduling instruction of the gNB-1 corresponding to the first service is received, but the buffer area of the baseband processor does not receive the payload data packet that is of the first service and sent by the APP1, the baseband processor may generate a padding package formed by an invalid payload of the first service, and send the padding package to the gNB-1 in the uplink slot X indicated by the uplink scheduling instruction.

Therefore, in a possible scenario, after the first scheduling instruction is received, the uplink data packet Pag1 of the first service obtained by the UE-1 is a payload data packet. In another possible scenario, after the first scheduling instruction is received, the uplink data packet Pag1 of the first service obtained by the UE-1 is a padding package. In this embodiment of this application, a sequence between a time of obtaining Pag1 by the UE-1 and a time of receiving the first scheduling instruction is not limited. In some scenarios, the UE-1 may first obtain Pag1, and then receive the first scheduling instruction. Alternatively, in some scenarios, the UE-1 may first receive the first scheduling instruction, and then obtain Pag1.

Similarly, the UE-1 may obtain the uplink data packet Pag2 of the second service. Generally, in an aperiodic scheduling case, the uplink data packet Pag2 of the second service obtained by the UE-1 is a payload data packet, for example, an uplink data packet of a web page access service.

In some DSDA scenarios, for example, in a scenario in which the second service is also a call service, the second scheduling instruction may also be a periodic scheduling instruction. In this case, the uplink data packet Pag2 of the second service obtained by the UE-1 may also be a padding package.

Referring to the foregoing slot 10, in a scenario in which the first uplink time domain conflicts with the second uplink time domain and the priority of the first service is higher than that of the second service, when Pag1 is a payload data packet, the baseband processor may determine to allocate an uplink resource corresponding to the slot 10 to the SIM1, to transmit the uplink data packet Pag1 of the first service, to meet a high-priority service requirement. In this case, because no uplink resource is allocated, Pag2 cannot be uplink and is discarded. Discarding means that a data packet is not transmitted in a specified time domain. The discarded data packet can be requested for retransmission within the maximum quantity of retransmission times. After the maximum quantity of retransmission times is exceeded, the data packet cannot be transmitted again.

S107: When Pag1 is a padding package, determine whether Pag1 is initially transmitted or retransmitted, and a quantity of retransmission times of Pag1. When Pag1 is a padding package and is initially transmitted, Pag2 is preferred for uplink. When Pag1 is a padding package and is retransmitted, and the quantity of retransmission times is less than the maximum quantity of retransmission times M1, Pag2 is preferred for uplink. When Pag1 is a padding package and the quantity of retransmission times (i) is not less than the maximum quantity of retransmission times M1, Pag1 is preferred for uplink.

When Pag1 is transmitted for the first time (initially transmitted), Pag1 is a padding package, and Pag2 is a payload data packet, the baseband processor may determine to allocate an uplink resource corresponding to the slot 10 to the SIM2, to transmit the uplink data packet Pag2 of the second service.

In this case, Pag1 is discarded once because uplink transmission cannot be performed because no uplink resource is allocated to Pag1. After discarding, the UE-1 can request to retransmit Pag1. A quantity of retransmission times (i) of a data packet increases with a quantity of discarding times. Once discarding is performed, the quantity of retransmission times is i=i+1. The maximum quantity of retransmission times may be agreed between the base station and the user equipment. When the quantity of retransmission times reaches the maximum quantity of retransmission times, and the base station does not receive an uplink data packet (including payload data and a padding package) of the user equipment, the base station may determine that the communication connection is abnormal.

To avoid that the payload data packet of the low-priority service infinitely occupies the uplink resource for the padding package of the high-priority service, which affects the high-priority service (for example, determines that the communication connection is abnormal), the UE-1 may further determine, by using a relationship between a current quantity of retransmission times of the uplink data packet of the high-priority service and the corresponding maximum quantity of retransmission times corresponding to, whether to allocate the uplink resource to the low-priority service for transmitting the payload data packet.

Specifically, when it is determined that the quantity of retransmission times i of the padding package of the high-priority service is less than the maximum quantity of retransmission times M1 of the high-priority service, the UE-1 may determine to allocate the uplink resource to the low-priority service. When it is determined that the quantity of retransmission times of the padding package of the high-priority service is not less than the maximum quantity of retransmission times M1, the UE-1 may determine to allocate the uplink resource to the high-priority service without allowing the low-priority service to preempt the uplink resource.

For example, after it is determined that Pag1 is a padding package and Pag2 is a payload data packet, the UE-1 may determine that Pag1 is not transmitted for the first time (that is, is not initially transmitted) and the current quantity of retransmission times i of Pag1. For example, the UE-1 may determine that the current quantity of retransmission times of Pag1 is i=3, that is, third retransmission is performed for Pag1. For example, the maximum quantity of retransmission times of the first service is M1=4. In this case, the UE-1 may determine that the quantity of retransmission times of Pag1 is i<M1. Therefore, the UE-1 may determine to allocate the uplink resource corresponding to the slot 10 to the SIM2. When the slot 10 arrives, the SIM2 can use the TX1 to send the payload data packet Pag2 of the low-priority service.

The current quantity of retransmission times of Pag1 being i=4 means that this is the last uplink opportunity of Pag1. If the last uplink opportunity is missed, the base station determines that the first communication connection is abnormal, so that uplink data of the first service cannot be received. To avoid the foregoing problem, the UE-1 should send Pag1 to the base station at least in the last uplink. Therefore, when it is determined that the current quantity of retransmission times of Pag1 is i=4=M1, that is, the quantity of retransmission times of Pag1 being i<M1 is not valid, the UE-1 may determine to allocate the uplink resource corresponding to the slot 10 to the SIM1. When the slot 10 arrives, the SIM1 can send the padding package Pag1 of the high-priority service by using the TX1, so that the uplink resource of the padding package Pag1 of the high-priority service is prevented from being infinitely occupied by the payload data packet Pag2 of the low-priority service.

In some embodiments, M1 in S107 may alternatively be replaced with M3. M3<M1. For example, according to M1=4, the UE-1 may determine M3=3. When i<3, the UE-1 allocates the uplink resource to the SIM2 to send Pag2. When i=3 or 4, the UE-1 allocates the uplink resource to the SIM1 to send Pag1. In this way, the UE-1 may reserve a plurality of opportunities for a high-priority service to send a padding package, to adapt to a complex network environment and avoid missing the only uplink opportunity due to a packet loss, which causes a communication connection abnormality corresponding to the high-priority service.

When both Pag1 and Pag2 are padding packages, the UE-1 may allocate the uplink resource corresponding to the slot 10 to the SIM1 or the SIM2. This is not limited in this embodiment of this application.

In the uplink resource configuration method shown in FIG. 3, while uplink quality of a high-priority service is not affected, the UE-1 may further provide a more efficient uplink service for a low-priority service, so that a user can obtain a better dual-SIM dual-active service.

In some embodiments, the UE-1 may further make a second mark on the low-priority service. When an uplink conflict occurs, the UE-1 may determine, according to the second mark, whether to preempt an uplink resource of a padding package of the high-priority service.

In an implementation, the UE-1 may determine, according to a delay requirement of the service, that the low-priority service is of low-delay or non-low-delay. The UE-1 may allow a low-priority service with a low delay to preempt the uplink resource of the padding package of the high-priority service. The UE-1 may refuse a low-priority service without a low delay to preempt the uplink resource of the high-priority padding package.

With reference to the schematic structural diagram shown in FIG. 2, a low-delay interface may be disposed between the application processor and the baseband processor. The application processor may notify the baseband processor of the delay requirement of the low-priority service through the low-delay interface: low delay or non-low delay.

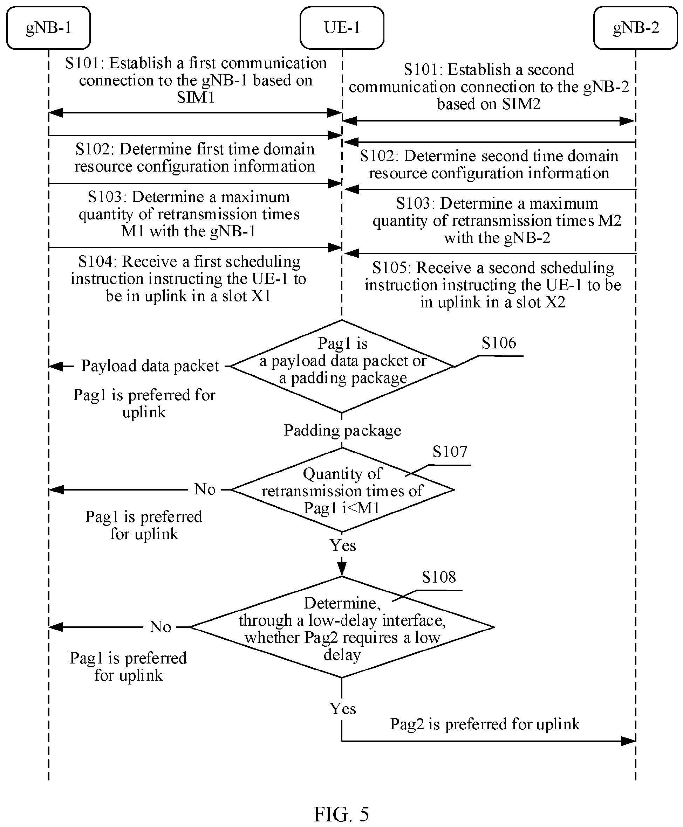

As shown in FIG. 5, S108: When determining that Pag1 is a padding package and the quantity of retransmission times of Pag1 is less than the maximum quantity of retransmission times M1 of the SIM1, the UE-1 determines, through the low-delay interface, whether Pag2 requires a low delay. When Pag2 requires a low delay, the UE-1 may allocate the uplink resource to the SIM2, so that the SIM2 can send the payload data packet Pag2 of the low-priority service. When the low-delay interface indicates that Pag2 is not service data requiring a low delay, the UE-1 may allocate the uplink resource to the SIM1, so that the SIM1 can send the padding package Pag1 of the high-priority service.

The low-delay interface, also referred to as a low-delay mode interface, usually indicates the delay requirement of the low-priority service in a unit of a second. For an electronic device, second is a relatively large unit of time. In this case, the UE-1 makes the second mark on the low-priority service with a relatively large granularity, which is not fine enough. Therefore, optionally, the UE-1 may further determine, according to a packet type corresponding to the data packet, whether to allow the low-priority service to preempt the uplink resource of the padding package of the high-priority service.

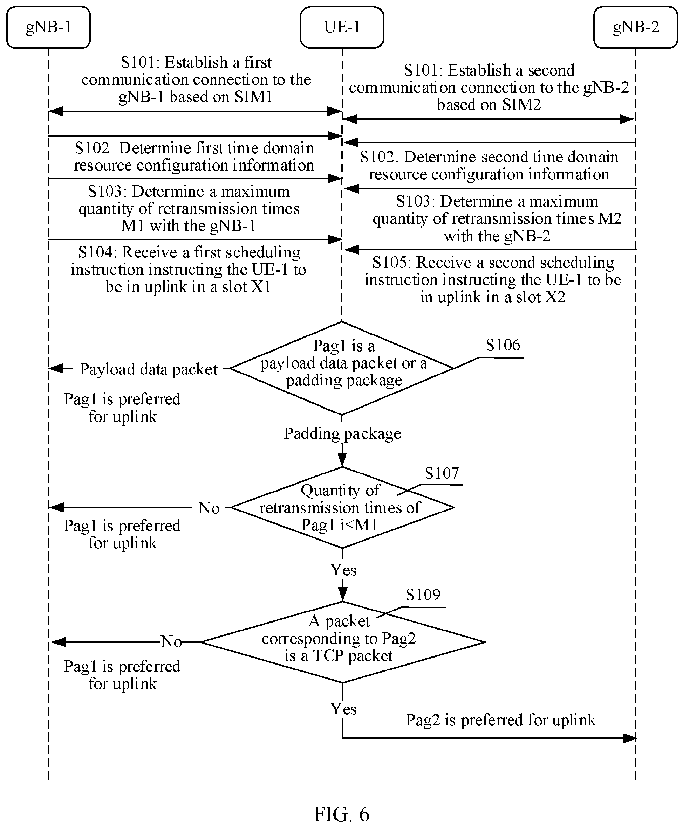

As shown in FIG. 6, S109: When determining that Pag1 is a padding package and the quantity of retransmission times of Pag1 is less than the maximum quantity of retransmission times M1 of the SIM1, the UE-1 determines whether a packet corresponding to Pag2 is a TCP packet. The TCP packet generally corresponds to a low delay. When Pag2 is a TCP packet, the UE-1 may allocate the uplink resource to the SIM2. When Pag2 is not a TCP packet, for example, a UDP packet, the UE-1 may allocate the uplink resource to the SIM1. In this way, compared with the low-delay interface, the UE-1 may make a finer second mark on the low-priority service by using a packet label.

According to the foregoing second mark method, the UE-1 may further classify the low-priority service in a finer manner, and determine, according to the finer classification, whether to preempt the uplink resource of the padding package of the high-priority service, to avoid random preemption, which affects the high-priority service.

In some embodiments, a high-priority queue and a low-priority queue may be further disposed in the baseband processor. The high-priority queue may be used to cache service data that requires a low delay. The low-priority queue caches service data that requires non-low delay. The baseband processor may determine, according to whether Pag2 of the second service is corresponding to the high-priority queue, whether Pag2 of the second service can preempt the uplink resource of the padding package of the high-priority service.

For example, when it is determined that Pag1 is a padding package, the quantity of retransmission times of Pag1 is less than the maximum quantity of retransmission times M1 of SIM1, and Pag2 is a to-be-sent data packet in the high-priority queue, the UE-1 may allocate the uplink resource to the SIM2 for uplink transmission of Pag2. When it is determined that Pag1 is a padding package, the quantity of retransmission times of Pag1 is less than the maximum quantity of retransmission times M1 of the SIM1, and Pag2 is a to-be-sent data packet in the low-priority queue, the UE-1 may allocate the uplink resource to the SIM1 for uplink transmission of Pag1.

In some embodiments, the application processor may further stamp each data packet with a priority label. The baseband processor may determine, according to the priority label of the data packet, whether Pag2 of the second service may preempt the uplink resource of the padding package of the high-priority service.

For example, when it is determined that Pag1 is a padding package, the quantity of retransmission times of Pag1 is less than the maximum quantity of retransmission times M1 of the SIM1, and a priority of a data packet of Pag2 is higher than a priority of a data packet of Pag1, the UE-1 may allocate the uplink resource to the SIM2 for uplink transmission of Pag2. When it is determined that Pag1 is a padding package, the quantity of retransmission times of Pag1 is less than the maximum quantity of retransmission times M1 of the SIM1, and the priority of the data packet of Pag2 is less than or equal to the priority of the data packet of Pag1, the UE-1 may allocate the uplink resource to the SIM1 for uplink transmission of Pag1.

In some embodiments, the application processor may further stamp each data packet with a preemption label. The label may be indicated by one bit. For example, 0 indicates "cannot preempt", and 1 indicates "can preempt". The baseband processor may determine, according to the preemption label of the data packet, whether Pag2 of the second service may preempt the uplink resource of the padding package of the high-priority service.

For example, when it is determined that Pag1 is a padding package, the quantity of retransmission times of Pag1 is less than the maximum quantity of retransmission times M1 of SIM1, and the bit of Pag2 is 1, the UE-1 may allocate the uplink resource to the SIM2 for uplink transmission of Pag2. When it is determined that Pag1 is a padding package, the quantity of retransmission times of Pag1 is less than the maximum quantity of retransmission times M1 of the SIM1, and the bit of Pag2 is 0, the UE-1 may allocate the uplink resource to the SIM1 for uplink transmission of Pag1.

In a scenario in which two transceiver radio frequencies are configured in the UE-1, optionally, the SIM1 and the SIM2 may also request, with reference to the foregoing method, to occupy a radio frequency transmit path of the other SIM card, to send a data packet by using two radio frequency transmit paths, thereby improving signal strength and improving user experience. For example, in a scenario in which the SIM1 is executing a call service and the SIM2 is executing a network game service, when a data packet generated by the call service is a padding package and data generated by the network game service is a payload data packet, the SIM2 may request to occupy an uplink resource of the padding package. In this case, the SIM2 may simultaneously send the payload data packet of the network game service by using the two radio frequency transmit paths, to improve service experience of the network game service without affecting the call service.

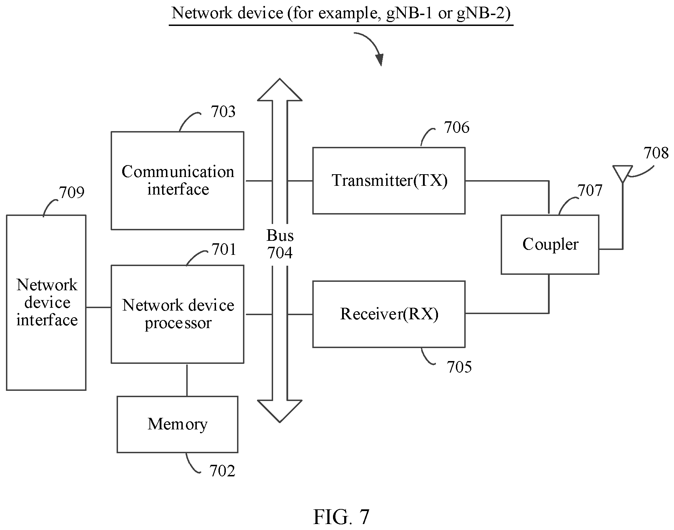

A structure of a network device according to an embodiment of this application is described below. FIG. 7 is an example of a structure of a network device according to an embodiment of this application.

As shown in FIG. 7, the network device may include: one or more network device processors 701, a memory 702, a communication interface 703, a receiver 705, a transmitter 706, a coupler 707, an antenna 708, and a network device interface 709. These components may be connected through a bus 704 or in another manner. An example in which these components are connected through the bus is used in FIG. 7.

The communication interface 703 may be used by the network device to communicate with another communication device, such as user equipment. Specifically, the user equipment may be the cellular phone shown in FIG. 2. Specifically, the communication interface 703 may be a 5G communication interface, or may be a communication interface of a future new air interface. Not limited to a wireless communication interface, the network device may further be configured with a wired communication interface 703, such as a local access network (local access network, LAN) interface. The transmitter 706 may be configured to transmit a signal output by the network device processor 701. The receiver 705 may be configured to receive a mobile communication signal received by the antenna 708.

In some embodiments of this application, the transmitter 706 and the receiver 705 may be considered as a wireless modem. In the network device, there may be one or more transmitters 706 and receivers 705. The antenna 708 may be configured to convert electromagnetic energy on a transmission line into an electromagnetic wave in free space, or convert an electromagnetic wave in free space into electromagnetic energy on a transmission line. The coupler 707 is configured to divide the mobile communication signal received by the antenna 708 into a plurality of signals, and allocate the plurality of signals to a plurality of receivers 705.

The memory 702 is coupled to the network device processor 701, and is configured to store various software programs and/or a plurality of sets of instructions. Specifically, the memory 702 may include a high-speed random access memory, and may further include a non-volatile memory, for example, one or more disk storage devices, a flash memory device, or another non-volatile solid-state storage device. The memory 702 may store a network communication program. The network communication program may be used to communicate with one or more additional devices, one or more user equipment, or one or more network devices.

In some embodiments of this application, the memory 702 may be configured to store an implementation program of the uplink resource configuration method provided in one or more embodiments of this application on a network device side. For implementation of the uplink resource configuration method provided in one or more embodiments of this application, refer to the foregoing embodiments.

The network device processor 701 may be configured to read and execute a computer-readable instruction. Specifically, the network device processor 701 may be configured to invoke a program stored in the memory 702, for example, the implementation program of the uplink resource configuration method provided in one or more embodiments of this application on the network device side, and execute instructions included in the program.

It should be noted that the network device shown in FIG. 7 is merely an implementation of this embodiment of this application. In actual application, the network device may further include more or fewer components. This is not limited herein.

The singular expressions "one", "one type of", "the", "the foregoing", and "this" used in this specification and the appended claims of this application are also intended to include plural forms, unless otherwise specified in the context clearly. It should be further understood that the term "and/or" used in this application indicates and includes any or all possible combinations of one or more listed items. As used in the foregoing embodiments, based on the context, the term "when" may be interpreted as a meaning of "is", "after", "in response to determining...", or "in response to detecting...". Similarly, based on the context, the phrase "when determining" or "if detecting (a stated condition or event)" may be interpreted as a meaning of "if determining...", "in response to determining...", "when detecting (a stated condition or event)", or "in response to detecting ... (a stated condition or event)".

All or some of the foregoing embodiments may be implemented by using software, hardware, firmware, or any combination thereof. When the software is used for implementation, implementation may be entirely or partially performed in the form of a computer program product. The computer program product includes one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer readable storage medium may be any available medium accessible by a computer, or a data storage device such as a server or a data center that includes one or more available media integrations. The usable medium may be a magnetic medium (for example, a soft disk, a hard disk, or a magnetic tape), an optical medium (for example, a DVD), a semiconductor medium (for example, an SSD), or the like.

Persons of ordinary skill in the art may understand that all or some of the procedures of the methods in the embodiments are implemented. The procedures may be completed by a computer program instructing related hardware. The program may be stored in a computer-readable storage medium. When the program is executed, the procedures in the foregoing method embodiments may be included. The storage medium includes: any medium that can store program code, such as a ROM, a RAM, a magnetic disk, or an optical disc.

## Claims

1. An uplink resource configuration method, applied to a first electronic device, wherein the first electronic device supports communication over a first network corresponding to a first subscriber identity module card SIM1, and supports communication over a second network corresponding to a second subscriber identity module card SIM2, and the method comprises:
receiving (S104) a first scheduling instruction, wherein the first scheduling instruction instructs the first electronic device to send uplink data of a first service in a first uplink time domain;
receiving (S105) a second scheduling instruction, wherein the second scheduling instruction instructs the first electronic device to send uplink data of a second service in a second uplink time domain; and
the first uplink time domain conflicts with the second uplink time domain;
sending a second to-be-sent data packet in the second uplink time domain when a first to-be-sent data packet is a padding package; wherein the first to-be-sent data packet corresponds to the first service, the second to-be-sent data packet corresponds to the second service.

2. The method according to claim 1, wherein a priority of the first service is higher than a priority of the second service.

3. The method according to claim 1, wherein the first service is a voice call service.

4. The method according to claim 1, wherein the second service is any one of the following: a web page access service and a network game service.

5. The method according to any one of claims 1 to 4, wherein a maximum quantity of retransmission times of the first to-be-sent data packet is M1, and the method further comprises:
sending the second to-be-sent data packet of the second service in the second uplink time domain when the first to-be-sent data packet of the first service is a padding package, and a current quantity of retransmission times of the first to-be-sent data packet i<M1.

6. The method according to any one of claims 1 to 4, wherein the sending the second to-be-sent data packet in the second uplink time domain when the first to-be-sent data packet is a padding package comprises: sending the second to-be-sent data packet in the second uplink time domain when the first to-be-sent data packet is a padding package, and the padding package is at initial transmission.

7. The method according to any one of claims 1 to 4, wherein a maximum quantity of retransmission times of the first to-be-sent data packet is M1, and the method further comprises:
the sending the second to-be-sent data packet in the second uplink time domain when the first to-be-sent data packet is a padding package comprises: sending the second to-be-sent data packet in the second uplink time domain when the first to-be-sent data packet is a padding package, and a current quantity of retransmission times of the first to-be-sent data packet i<M3, wherein M3<M1.

8. The method according to claim 5, wherein the method further comprises:
sending the first to-be-sent data packet in the first uplink time domain, when the first to-be-sent data packet is a padding package, and i=M1.

9. The method according to claim 5 or 8, wherein the method further comprises:
the sending the second to-be-sent data packet in the second uplink time domain when the first to-be-sent data packet is a padding package, and a current quantity of retransmission times of the first to-be-sent data packet i<M1 comprises: sending the second to-be-sent data packet in the second uplink time domain when the first to-be-sent data packet is a padding package, a current quantity of retransmission times of the first to-be-sent data packet i<M1, and the second to-be-sent data packet requires a low delay.

10. The method according to claim 9,
wherein the method further comprises: determining, based on delay information obtained through a low-delay interface or based on a packet type of the second to-be-sent data packet, whether the second to-be-sent data packet requires a low delay.

11. The method according to claim 9, wherein when the second to-be-sent data packet is a TCP packet, the second to-be-sent data packet requires a low delay.

12. The method according to claim 5 or 8, wherein the method further comprises:
determining a priority of a buffer queue in which the second to-be-sent data packet is located in a baseband processor; and
the sending the second to-be-sent data packet in the second uplink time domain when the first to-be-sent data packet is a padding package, and i<M1 comprises: sending the second to-be-sent data packet in the second uplink time domain when the first to-be-sent data packet is a padding package, i<M1, and the second to-be-sent data packet is buffered in a high-priority queue in the baseband processor.

13. The method according to claim 5 or 8, wherein the method further comprises:
determining whether a data packet priority of the second to-be-sent data packet is higher than a data packet priority of the first to-be-sent data packet; and
the sending the second to-be-sent data packet in the second uplink time domain when the first to-be-sent data packet is a padding package, and i<M1 comprises: sending the second to-be-sent data packet in the second uplink time domain when the first to-be-sent data packet is a padding package, i<M1, and the data packet priority of the second to-be-sent data packet is higher than the data packet priority of the first to-be-sent data packet.

14. The method according to claim 5 or 8, wherein the method further comprises:
determining a preemption label of the second to-be-sent data packet; and
the sending the second to-be-sent data packet in the second uplink time domain when the first to-be-sent data packet is a padding package, and i<M1 comprises: sending the second to-be-sent data packet in the second uplink time domain when the first to-be-sent data packet is a padding package, i<M1, and the preemption label of the second to-be-sent data packet indicates that the second to-be-sent data packet can perform preemption.

15. An electronic device, comprising one or more processors and one or more memories, wherein the one or more memories are coupled to the one or more processors, and the one or more memories are configured to store computer program code, wherein the computer program code comprises computer instructions, and when the one or more processors execute the computer instructions, the method according to any one of claims 1 to 14 is performed.
